# FASCICULE DE BREVET EUROPEEN

(11) **EP 2 216 194 B1**
(45) Date de publication et mention de la délivrance du brevet: **07.05.2014**
(21) Numéro de dépôt: 10152635.8
(22) Date de dépôt: 04.02.2010
(51) Int. Cl.: B60K 17/356, F16H 61/44

(54) **Circuit hydraulique permettant un couplage**
Hydraulisches Getriebe
Hydraulic transmission circuit

(30) Priorité: 15.04.2009 FR 0952460; 04.02.2009 EP 09152069
(43) Date de publication de la demande: 11.08.2010
(73) Titulaire: Poclain Hydraulics Industrie, 60411 Verberie (FR)
(72) Inventeur: Heren, Jean, 60280, Margny Les Compiegne (FR)
(74) Mandataire: Intès, Didier Gérard André

(56) Documents cités:
- EP-A- 0 547 947
- FR-A1- 2 861 448
- FR-A1- 2 907 528
- US-B1- 6 662 557

## Description

L'invention concerne la synchronisation de moteurs hydrauliques, et notamment de moteurs attelés à des organes de déplacement rotatifs tels que les roues d'un véhicule.

De manière générale, les moteurs hydrauliques sont utilisés pour entrainer un organe rotatif tel qu'une roue, une bille de rouleau compresseur, une chenille, etc. Le plus souvent, l'arbre de sortie entraine une ou plusieurs roues d'un véhicule.

Il arrive fréquemment qu'il soit nécessaire de synchroniser la vitesse de rotation des différents organes rotatifs entrainés par les moteurs. Par exemple, dans un véhicule entrainé par deux roues disposées sur un même essieu, il est nécessaire que celles-ci tournent à la même vitesse, du moins la plus grande partie du temps.

Lorsque les organes rotatifs entraînés sont des roues, celles-ci ne sont pas nécessairement des roues situées aux extrémités opposées du même essieu d'un véhicule. Il peut s'agir de roues quelconques que l'on cherche à synchroniser. Il peut notamment s'agir de deux roues disposées sur un même côté d'un véhicule. Les moteurs peuvent ainsi être des moteurs utilisés pour entrainer les chenilles d'un véhicule à chenilles.

L'invention peut être appliquée également à des circuits dans lesquels les moteurs n'entrainent pas des organes de déplacement, mais par exemple des outils. Pour simplifier, les explications qui suivent seront données en référence à des roues comme organes rotatifs entrainés par les moteurs, sans que cela ne constitue une limitation de la portée de l'invention.

Pour la synchronisation ou le couplage d'un groupe de moteurs hydrauliques, il est connu de réaliser un dispositif de transmission hydraulique comprenant un circuit dédié à la synchronisation, dans lequel les orifices d'alimentation et d'échappement d'un sous-moteur de chacun des moteurs synchronisés sont reliés ensemble de manière à constituer une boucle, c'est-à-dire un circuit fermé. Le brevet US 6 662 557 présente un tel dispositif.

Cependant, ce dispositif présente l'inconvénient que le fluide hydraulique contenu dans le circuit de synchronisation s'échauffe, cet échauffement pouvant avoir des conséquences dommageables pour le dispositif de transmission hydraulique. En outre, du fait des pertes de charge dans le circuit de synchronisation, le dispositif de transmission présente un rendement faible.

De plus, le dispositif de transmission n'assure pas une distribution homogène de la puissance. En effet, seule une moitié des sous-moteurs est utilisée pour distribuer la puissance motrice, l'autre moitié étant affectée à la synchronisation. Certains sous-moteurs sont donc bien plus sollicités que d'autres, et la durée de vie globale du dispositif de transmission est donc réduite.

Enfin, le dispositif de transmission hydraulique présenté n'est utilisé que pour la synchronisation de moteurs comportant deux sous-moteurs. Aucune solution n'est proposée pour la synchronisation de moteurs ne présentant pas plusieurs sous-moteurs.

Le brevet européen EP 0 547 947 présente un circuit hydraulique, pour l'entrainement de roues avant et arrière d'un véhicule. Ce circuit est proposé pour assurer un couplage entre les moteurs attelés aux différentes roues d'un véhicule, pour éviter le patinage des roues de celui-ci.

Cependant, dans ce circuit, la répartition de la puissance motrice est faite de manière inégale entre les différents moteurs ou sous-moteurs. En particulier, au moins un sous-moteur de l'un des moteurs est relié directement aux orifices principaux de la pompe. Il peut donc délivrer, a priori, un couple élevé. Inversement, ce sous-moteur est soumis à des contraintes mécaniques relativement fortes, en raison de la différence de pression élevée entre ses orifices principaux ; et il y a un risque de patinage non négligeable, sur terrain glissant, de la roue qu'il entraine.

L'invention s'applique à un circuit hydraulique, comportant :
- au moins un moteur primaire comportant au moins un premier et un deuxième sous-moteurs distincts, le premier sous-moteur présentant un premier orifice principal d'alimentation ou d'échappement,
   le deuxième sous-moteur présentant un deuxième orifice principal d'alimentation ou d'échappement,
- au moins un moteur secondaire ;
   circuit dans lequel ledit premier orifice principal dudit au moins un moteur primaire est relié à un premier orifice principal dudit au moins un moteur secondaire par une première conduite de série.
Un circuit de ce type est divulgué par le document FR 2907528.

L'objectif de l'invention est de permettre un couplage entre ledit au moins un moteur primaire et ledit au moins un moteur secondaire, sans générer un risque d'échauffement excessif, et en assurant une répartition assez régulière de la puissance motrice entre les différents moteurs et/ou sous-moteurs, afin de permettre un excellent entrainement des organes entrainés par les moteurs (i.e., une excellente motricité, dans le cas d'un véhicule), avec un risque de patinage et une usure des moteurs réduits.

Cet objectif est atteint grâce au fait que le deuxième orifice principal dudit au moins un moteur primaire est relié à un deuxième orifice principal dudit au moins un moteur secondaire par une deuxième conduite de série.

On notera que dans ce texte, un orifice principal désigne un orifice, interne ou externe, d'un moteur ou d'un sous-moteur, via lequel transite la plus grande partie de l'alimentation et/ou l'échappement de fluide de ce moteur ou sous-moteur. Au sens de la présente invention, un sous-moteur d'un moteur hydraulique comporte deux orifices principaux. Le sous-moteur peut comporter en outre des orifices secondaires, pour permettre l'évacuation d'un débit de fuite en cas de surpression, des mesures de grandeurs diverses, etc.

L'intérêt de la structure du circuit selon l'invention est que l'on a les deux relations suivantes (on se place dans le cas où l'on a plusieurs moteurs primaires et secondaires, mais les relations sont également vérifiées s'il n'y a qu'un seul moteur primaire et/ou un seul moteur secondaire) :
- le débit de fluide cumulé des premiers sous-moteurs des moteurs primaires échangé via les premiers orifices principaux des moteurs primaires est égal au débit de fluide cumulé échangé avec les premier orifices principaux des moteurs secondaires ; et de plus,
- le débit de fluide cumulé des deuxièmes sous-moteurs des moteurs primaires échangé via les deuxièmes orifices principaux des moteurs primaires est égal au débit de fluide cumulé échangé avec les deuxièmes orifices principaux des moteurs secondaires.

Aux deux relations précédentes liant des débits correspondent deux relations équivalentes liant les vitesses de rotation des moteurs primaires et des moteurs secondaires, du fait que pour chaque sous-moteur, la vitesse de rotation est égale au ratio entre le débit et la cylindrée. Pour cette raison, la structure du circuit selon l'invention assure un couplage du ou des moteurs primaires, avec le ou les moteurs secondaires. En général, ce couplage se traduit par le fait que les vitesses de rotation des moteurs primaires sont proportionnelles, et habituellement égales, à celles des moteurs secondaires. Par exemple, si un moteur primaire et un moteur secondaire ayant les mêmes cylindrées sont reliés par une première conduite de série et une deuxième conduite de série conformément à l'invention, alors leurs vitesses de rotation sont égales, ce qui peut être requis pour l'entrainement de roues de même diamètre d'un véhicule.

Dans ce texte, le terme 'une conduite de série' doit être compris comme une conduite qui ne comporte pas de dérivation (une légère soustraction ou un léger apport de fluide restant possible), du moins dans une configuration dite 'de couplage', dans laquelle on souhaite synchroniser les moteurs primaire(s) et secondaire(s). Ainsi, le circuit selon l'invention peut comporter des valves ou des équipements qui lui permettent d'être exploité dans d'autres configurations que la configuration de couplage indiquée précédemment du ou des moteurs primaires avec le ou les moteurs secondaires.

L'invention peut être appliquée à une grande diversité de circuits hydraulique. Ainsi dans le circuit hydraulique selon l'invention, si l'on note N le nombre total cumulé de moteurs primaires et secondaires (la somme du nombre de moteurs primaires et de moteurs secondaires), il se peut que chacun des moteurs présente N sous-moteurs, ou qu'au moins un des moteurs primaires et secondaires comporte un nombre de sous-moteurs différent de N, notamment dans le cas où N est strictement supérieur à deux (N peut valoir deux, ou strictement plus de deux).

D'autre part, chacun des sous-moteurs des moteurs primaires et secondaires peut avoir une même cylindrée ; ou encore, au moins l'un des sous-moteurs de ces moteurs peut présenter une cylindrée différente par rapport à un autre sous-moteur. Cette caractéristique peut être choisie en particulier dans le cas où chacun des N moteurs primaires et secondaires comporte N sous-moteurs.

Par ailleurs, dans le circuit selon l'invention, au moins un moteur primaire et/ou secondaire peut comporter aucun, un, ou au moins deux sous-moteurs relié directement ou apte à être relié directement (c'est-à-dire, sans que ce soit via un autre moteur ou sous-moteur), à une source de fluide sous-pression fournissant du fluide sous pression au circuit, par exemple une pompe principale du circuit hydraulique.

Selon un mode de réalisation de l'invention, le premier sous-moteur comporte en outre un troisième orifice principal, et le deuxième sous-moteur comporte en outre un quatrième orifice principal, et les troisième et quatrième orifices principaux dudit au moins un moteur primaire sont reliés aux deux orifices principaux d'une pompe principale du circuit hydraulique.

Selon un mode de réalisation, dans chaque moteur secondaire, le premier et le deuxième orifice principal sont les seuls orifices principaux du moteur secondaire. Le moteur secondaire est alors un moteur ne comportant pas plusieurs sous-moteurs.

Dans ce cas, du fait du couplage assuré par les conduites de série, la cylindrée cumulée des premiers sous-moteurs des moteurs primaires doit égaler la cylindrée cumulée des deuxièmes sous-moteurs des moteurs primaires.

Selon un mode de réalisation, dans le circuit hydraulique ledit au moins un moteur secondaire comporte deux sous-moteurs, dont le premier comporte ledit premier orifice principal dudit au moins un moteur secondaire, et dont le deuxième comporte ledit deuxième orifice principal dudit au moins un moteur secondaire. Le moteur secondaire peut être agencé également de telle sorte que ses premier et deuxième orifices principaux soient ceux de l'un de ses sous-moteurs, l'autre sous-moteur échangeant du fluide par d'autres orifices, et servant à fournir un complément de couple au moteur secondaire.

Selon un mode de réalisation, le circuit hydraulique comprend en outre au moins un moteur tertiaire interposé sur une des conduites de série, divisant celle-ci en un premier et un deuxième tronçon, de telle sorte que :
- le premier tronçon est relié à un premier orifice principal du moteur tertiaire ou de chacun des moteurs tertiaires ;
- le deuxième tronçon est relié à un deuxième orifice principal du moteur tertiaire ou de chacun des moteurs tertiaires. La présence du moteur tertiaire permet d'étendre le couplage réalisé entre les moteurs primaires et secondaires, au(x) moteur(s) tertiaire(s). Ce principe est généralisable à un nombre quelconque de moteurs ou groupes de moteurs interposés sur les conduites de série.

Selon un mode de réalisation, le circuit hydraulique comprend un seul moteur primaire qui comporte exactement deux sous-moteurs.

Selon un mode de réalisation, le circuit hydraulique comprend deux moteurs primaires, chacun comportant exactement deux sous-moteurs.

Selon un mode de réalisation, le circuit hydraulique est agencé dans un véhicule, et le moteur primaire ou chacun des moteurs primaires est attelé à une roue sur un premier côté du véhicule, et le moteur secondaire ou chacun des moteurs secondaires est attelé à une roue sur un côté opposé du véhicule.

Selon un mode de réalisation, le circuit hydraulique comprend en outre une conduite auxiliaire apte à relier l'une à l'autre la première et la deuxième conduite de série, et susceptible de permettre le découplage de la vitesse de rotation dudit au moins un moteur primaire par rapport à celle dudit au moins un moteur secondaire. Sur la conduite auxiliaire est interposée en général une valve de désactivation à deux positions ou un moyen équivalent, avec une position dans laquelle la valve isole les deux tronçons de la conduite auxiliaire, et une position dans laquelle elle les relie, éventuellement avec une restriction. On comprend donc que le circuit peut être exploité dans une configuration de couplage, dans lequel la conduite auxiliaire est isolée par la valve, et le couplage est réalisé comme prévu selon l'invention ; et dans une configuration de découplage, dans lequel la conduite auxiliaire permet le passage d'une certaine quantité de fluide d'une conduite de série à l'autre, ce qui réduit voire fait disparaître le couplage réalisé par le circuit en configuration de couplage entre le ou les moteurs primaires et le ou les moteurs secondaires.

Selon une variante de ce mode de réalisation, la conduite auxiliaire est une conduite interne d'un moteur primaire ou secondaire. Ce mode de réalisation permet de réaliser de manière compacte et à faible coût la fonction de réduction ou de suppression du couplage indiquée précédemment.

Selon un mode de réalisation, au moins un premier moteur primaire comporte en outre au moins un troisième sous-moteur distinct des premier et deuxième sous-moteurs. Grâce à ce troisième sous-moteur, on peut disposer sur l'engin sur lequel le circuit est agencé, d'un couple, d'une cylindrée, plus importants sur le moteur primaire comportant le troisième sous-moteur, que sur d'autres moteurs. Cette configuration peut être utile lorsqu'un moteur primaire doit développer un couple particulièrement important.

Ce mode de réalisation peut être aménagé afin de disposer de multiples configurations d'exploitation du circuit. Par exemple, selon une variante le circuit hydraulique comporte en outre une valve de désactivation disposée en série sur une conduite reliée à un orifice principal dudit troisième sous-moteur, grâce à laquelle ledit troisième sous-moteur peut fournir un couple au moteur dont il fait partie ou être mis en bypass. Dans la phrase précédente, la 'conduite' peut désigner tout passage de fluide, par exemple une canalisation souple ou rigide, un passage aménagé à l'intérieur d'un carter d'un moteur, ou tout autre moyen équivalent.

Deux variantes de ce dernier mode de réalisation peuvent avantageusement être mises en oeuvre. Dans ces deux variantes, le premier sous-moteur du premier moteur primaire présente un troisième orifice principal d'échappement ou alimentation en fluide, et le deuxième sous-moteur dudit premier moteur primaire présente un quatrième orifice principal d'échappement ou alimentation en fluide, distincts des premier et deuxième orifices principaux.

Selon la première variante, dans le circuit hydraulique, dans une première position de la valve, le troisième sous-moteur est relié auxdits troisième et quatrième orifices du premier moteur primaire ; alors que dans la deuxième position de la valve, les deux orifices principaux du troisième sous-moteur sont mis en relation l'un avec l'autre. Ainsi, dans la première position de la valve, le troisième sous-moteur apporte un complément de couple aux premier et deuxième sous-moteurs, pour le moteur primaire ; dans la deuxième position de la valve, le troisième sous-moteur est bypassé.

Selon la deuxième variante, dans la première position de la valve, le troisième sous-moteur est relié aux troisième et quatrième orifices du premier moteur primaire, alors que dans la deuxième position de la valve, les troisième et quatrième orifices principaux dudit premier moteur primaire sont reliés l'un avec l'autre. On comprend que dans la deuxième position de la valve, le troisième moteur en outre est relié via des orifices externes du premier moteur primaire aux orifices principaux d'une source de fluide sous pression.

Ainsi, dans la première position de la valve, le troisième sous-moteur apporte un complément de couple aux premier et deuxième sous-moteurs, pour le moteur primaire ; dans la deuxième position de la valve, seul le troisième sous-moteur est actif dans le moteur primaire, les premier et deuxième sous-moteurs étant bypassés.

L'invention vise également un dispositif hydraulique servant à entrainer deux groupes de moteurs : d'une part, au moins un moteur primaire devant être couplé avec au moins un moteur secondaire, et d'autre part, au moins un autre moteur primaire devant être couplé avec au moins un autre moteur secondaire. Ce type de dispositif est utilisé notamment pour l'entrainement des groupes de moteurs entrainant respectivement les roues situées sur un premier et un deuxième côtés d'un véhicule.

Dans ce cas, l'objectif de l'invention est dans chacun de ces groupes de moteurs, de réaliser un couplage du ou des moteurs primaires avec le ou les moteurs secondaires, sans générer d'échauffement excessif, et en assurant une répartition assez régulière de la puissance motrice entre les différents moteurs et/ou sous-moteurs, afin de permettre un excellent entrainement des organes entrainés par les moteurs (i.e., une excellente motricité, dans le cas d'un véhicule), avec un risque de patinage et une usure des moteurs réduits.

Cet objectif est atteint grâce au fait que le dispositif hydraulique comprend deux circuits hydrauliques tels que définis précédemment, dans lesquels le premier sous-moteur dudit au moins un moteur primaire présente en outre un troisième orifice principal d'échappement ou alimentation en fluide, et le deuxième sous-moteur dudit au moins un moteur primaire présente en outre un quatrième orifice principal d'échappement ou alimentation en fluide, distincts des premier et deuxième orifices principaux, dispositif hydraulique dans lequel les troisièmes et quatrièmes orifices principaux des moteurs primaires du premier et du deuxième circuits sont reliés aux orifices principaux d'une même source de fluide sous pression.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un circuit selon l'invention, comportant deux moteurs primaires et un moteur secondaire ;
- la figure 2 est une vue schématique d'un circuit selon l'invention, comportant un moteur primaire et un moteur secondaire ;
- les figures 3 à 6 sont des vues schématiques de dispositifs hydrauliques réunissant deux circuits hydrauliques selon l'invention, chacun comportant un moteur primaire et un moteur secondaire, ces dispositifs différant les uns des autres par l'agencement des sous-moteurs de leurs moteurs primaires, et/ou par la présence de moteurs additionnels dit moteurs tertiaires, dans les circuits hydrauliques.

Dans les figures, des éléments identiques ou analogues portent les mêmes références, ou des références différant d'un multiple de 100.

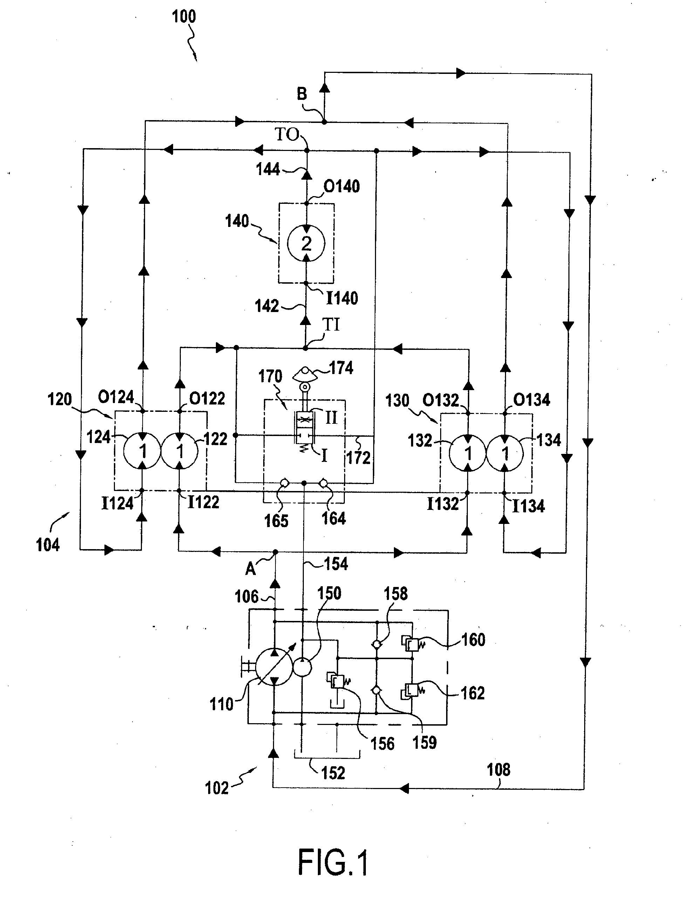

En faisant référence à la figure 1, un circuit de transmission hydraulique dans un premier mode de réalisation de l'invention va maintenant être décrit. Ce circuit de transmission hydraulique est monté sur un véhicule à trois roues (non représenté), dont il sert à assurer la propulsion.

Ce circuit 100 comprend une partie de pompe 102 et une partie d'entrainement 104.

La partie de pompe 102 comprend deux conduites principales, à savoir une conduite d'alimentation commune 106 et une conduite d'échappement commune 108, reliées respectivement aux orifices principaux d'une pompe 110.

Pour alimenter le circuit 100 en fluide, on utilise une pompe de gavage 150 couplée à la pompe 110. Cette pompe de gavage 150 soutire du fluide hydraulique depuis un réservoir 152 et l'injecte dans une conduite d'alimentation 154. Afin de limiter la pression dans la ligne d'alimentation 154, il est prévu une valve de limitation de la pression 156 apte à relier la conduite d'alimentation 154 au réservoir 152 en cas de dépassement d'une valeur de pression prédéterminée.

La conduite d'alimentation 154 est reliée via un premier clapet anti-retour 158 à la conduite d'alimentation commune 106 et via un deuxième clapet anti-retour 159 à la conduite d'échappement commune 108. Le fluide hydraulique est ainsi injecté, en toutes circonstances, si nécessaire, dans celle des conduites communes d'alimentation ou d'échappement 106 ou 108 qui est à la plus faible pression à l'instant considéré. Reliées en parallèle avec les clapets anti-retour 158 et 159, des valves 160 et 162 de limitation de la pression sont également prévues, afin de limiter la pression dans celle des conduites communes d'alimentation ou d'échappement 106 et 108 qui est à la plus haute pression à l'instant considéré.

La partie d'entrainement 104 du circuit 100 comporte deux moteurs 120, 130 dits moteurs primaires, et un moteur 140 dit moteur secondaire.

Chacun des moteurs primaires comporte deux sous-moteurs, respectivement 122, 124 et 132, 134. Les sous-moteurs 122 et 132 sont dits premiers sous-moteurs. Ils comportent chacun un premier orifice principal du moteur primaire concerné, O122 et O132, ainsi qu'un troisième orifice principal, I122, et I132. De manière générale dans ce document, le préfixe I dénote un orifice d'alimentation, et O un orifice d'échappement, dans le mode habituel de fonctionnement du circuit.

Les sous-moteurs 124 et 134 sont dits deuxièmes sous-moteurs. Ils comportent chacun un deuxième orifice principal du moteur primaire concerné, I124 et I134, ainsi qu'un quatrième orifice principal, O124 et O134.

Le sens du flux de fluide, dans le mode habituel de fonctionnement du circuit 100, est indiqué par les flèches sur la figure 1. Dans les moteurs primaires 120 et 130, les premiers, deuxièmes, troisièmes et quatrièmes orifices principaux sont des orifices externes.

Le moteur secondaire 140 comporte deux orifices principaux I140 et O140, qui permettent respectivement l'alimentation et l'échappement de fluide dans le mode de fonctionnement habituel du circuit 100.

Le premier orifice principal O122, O132, de chaque moteur primaire 120, 130 est relié au premier orifice principal I140 du moteur secondaire 140, via un embranchement TI et via une première conduite de série 142.

Le deuxième orifice principal I124, I134, de chaque moteur primaire 120, 130, est relié au deuxième orifice principal O140 du moteur secondaire 140 via une deuxième conduite de série 144 et via un embranchement TO.

Le troisième orifice principal des moteurs 120 et 130 (respectivement les orifices I122 et I132) de chaque moteur primaire 120, 130 est relié, via un embranchement A et via la conduite d'alimentation commune 106 à un premier orifice principal de la pompe 110.

Le quatrième orifice principal externe d'alimentation/échappement (respectivement les orifices O124 et O134) de chaque moteur primaire 120, 130 est relié, via un embranchement B et via la conduite d'échappement commune 108 à un deuxième orifice principal de la pompe 110.

Les conduites de série 142, 144 sont reliées à la conduite d'alimentation 154 via des clapets anti-retour 164, 165, qui permettent le cas échéant, de maintenir un niveau de pression suffisant dans ces conduites, compensant les fuites éventuelles des différents composants. Ces clapets sont habituellement fermés et ne jouent ainsi aucun rôle dans le couplage.

Dans le circuit 100 présenté, les moteurs 120 et 130 sont identiques. Aussi, leurs sous-moteurs présentent des cylindrées égales, mais l'invention peut être réalisée sans que cela ne soit le cas.

Grâce à la structure du circuit selon l'invention, les conduites de série 142, 144 induisent un couplage entre les sous-moteurs des moteurs primaires et le moteur secondaire (éventuellement, les sous-moteurs du ou des moteur(s) secondaire(s)). En l'occurrence, dans le circuit 100, ce couplage est réalisé de manière à ce que les moteurs primaires et le moteur secondaire tournent à la même vitesse, lorsque les moteurs 120 et 130 tournent tous deux à la même vitesse. Pour cela, la cylindrée du moteur secondaire 140 ('2') est égale d'une part à la somme des cylindrées ('1') des sous-moteurs 122 et 132 des moteurs primaires auxquels elle est reliée par la conduite de série 142, et d'autre part, à la somme des cylindrées ('1') des sous-moteurs 124 et 134 des moteurs primaires auxquels elle est reliée par la conduite de série 144.

Aussi, grâce aux conduites de série 142 et 144, les vitesses de rotation des moteurs primaires 120, 130, et du moteur secondaire 140 sont couplées et proportionnelles.

Enfin, le circuit 100 comporte également des moyens pour découpler le moteur secondaire 140 des moteurs primaires 120 et 130. En effet, il comporte en outre une conduite auxiliaire 172 reliant l'une à l'autre la première et la deuxième conduite de série 142, 144, permettant d'induire un découplage de la vitesse de rotation des moteurs primaires 120, 130, par rapport à celle du moteur secondaire 140.

Sur la conduite auxiliaire 172 est interposée une valve progressive de désactivation 170 à deux positions, une position I dans laquelle la valve isole les deux tronçons de la conduite auxiliaire, et une position II dans laquelle elle les relie avec une restriction. La valve 170 est actionnée par un actuateur ou actionneur 174. Dans d'autres modes de réalisation de l'invention, la valve de désactivation peut présenter plus de deux positions.

Lorsque la valve 170 est en position d'ouverture (II), le flux de fluide passant à travers la conduite auxiliaire 172 permet aux moteurs primaires de fonctionner à une vitesse non proportionnelle à celle du moteur 140, du fait qu'il n'y a plus conservation du débit entre les entrées et les sorties des première et deuxième conduites de série.

Dans un cas extrême, on pourrait par exemple concevoir que la totalité du débit sortant des sous-moteurs 122 et 132 via la conduite de série 142, passe par la conduite auxiliaire 172 et soit redirigée via le tronçon aval de la conduite de série 144 vers les orifices d'alimentation I124 et I134 des sous-moteurs 124 et 134. Le moteur secondaire serait alors arrêté, alors que les moteurs 120 et 130 pourraient continuer à tourner.

Enfin, on notera que dans le mode de fonctionnement habituel de ce circuit, tel que représenté par les flèches sur la figure 1, la pression chute depuis une haute pression en sortie de la pompe, à l'embranchement A, via une pression intermédiaire haute à l'embranchement TI, puis une pression intermédiaire basse à l'embranchement TO, pour aboutir à la basse pression de la pompe à l'embranchement B. Ainsi, la chute de pression est régulière dans le circuit et la puissance motrice est distribuée de manière régulière entre les différents sous-moteurs, qui tous participent à la transmission de puissance.

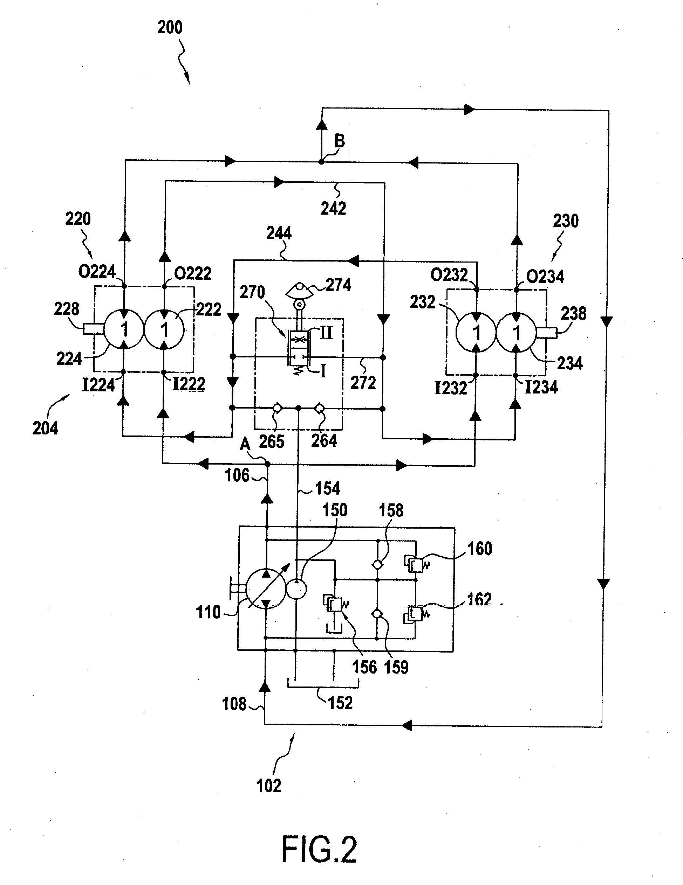

En faisant référence à la figure 2, un circuit de transmission hydraulique 200 dans un deuxième mode de réalisation de l'invention va maintenant être décrit.

Le circuit de transmission hydraulique 200 comprend une partie de pompe 102 et une partie d'entrainement 204. La partie 102 est identique à celle du circuit 100.

La partie d'entrainement 204 du circuit 200 comporte un seul moteur primaire 220 et un seul moteur secondaire 230. Aussi, ce mode de réalisation de l'invention est un peu particulier du fait que le moteur primaire et le moteur secondaire sont identiques et que le circuit est agencé de manière symétrique entre les deux moteurs (ce qui fait que l'on aurait pu considérer que le moteur 220 est le moteur secondaire, et le moteur 230 le moteur primaire). De la sorte, le couplage opéré selon l'invention entre les deux moteurs est réalisé sans qu'il y ait un moteur ou un sens de fonctionnement préférentiel.

Chacun des moteurs 220, 230 comprend un arbre de sortie 228, 238, qui entraine une roue de véhicule non représentée.

Le moteur primaire 220 comporte deux sous-moteurs, respectivement 222 et 224. Chacun de ces sous-moteurs comporte deux orifices principaux. Ainsi, le premier moteur primaire 220 comporte un premier sous-moteur 222 avec un premier orifice principal 0222 et un troisième orifice principal I222 ; et un deuxième sous-moteur 224 avec un deuxième orifice principal I224 et un quatrième orifice principal 0224.

Les orifices I222 et I224 sont des orifices d'alimentation dans le mode habituel de fonctionnement du circuit 200. Les orifices 0222 et 0224 sont des orifices d'échappement dans le mode habituel de fonctionnement du circuit 200. Le sens du flux de fluide, dans le mode habituel de fonctionnement du circuit 200, est indiqué par les flèches sur la figure 2.

Le moteur secondaire 230 comporte également deux sous-moteurs, respectivement 232 et 234. Chacun de ces sous-moteurs comporte deux orifices principaux, I232, I234, 0232, 0234.

Pour l'alimentation en fluide des moteurs 220 et 230, le troisième orifice principal I222 du moteur primaire 220, ainsi que l'orifice principal I232 du moteur secondaire 230, sont reliés via un embranchement A et via la conduite d'alimentation commune 106 à un premier orifice principal de la pompe 110.

Pour l'échappement de fluide des moteurs 220 et 230, le quatrième orifice principal 0224 du moteur primaire 220, ainsi que l'orifice principal 0234 du moteur secondaire 230 sont reliés, via un embranchement B et via la conduite d'échappement commune 108 à un deuxième orifice principal de la pompe 110.

Le couplage entre le moteur primaire 220 et le moteur secondaire 230 est assuré de la manière suivante :

Le premier orifice principal 0222 du moteur primaire 220 est relié à l'orifice principal I234 du moteur secondaire 234 (premier orifice principal de celui-ci) par une première conduite de série 242 ; de plus, le deuxième orifice principal I224 du moteur primaire 220 est relié à l'orifice principal 0232 du moteur secondaire 230 (deuxième orifice principal de celui-ci) par une deuxième conduite de série 244.

Dans le circuit 200 présenté, les moteurs 220 et 230 sont identiques. Leurs sous-moteurs présentent des cylindrées égales ('1'), mais l'invention peut être réalisée sans que cela ne soit le cas, c'est-à-dire, dans chaque moteur, les deux sous-moteurs (222,224 ; 232,234) peuvent présenter des cylindrées différentes.

Selon l'invention, chacune des conduites de série 242, 244 induit un couplage entre les sous-moteurs du moteur primaire et du moteur secondaire. Dans le circuit 200, ce couplage est réalisé de telle sorte que le moteur primaire et le moteur secondaire tournent à des vitesses parfaitement couplées et proportionnelles (et en général, égales).

Par ailleurs, comme dans le circuit 100, les vitesses de rotation du moteur primaire et du moteur secondaire peuvent être découplées dans le circuit 200, grâce à des moyens pour découpler le moteur primaire 220 et le moteur secondaire 230.

Ces moyens comportent une conduite auxiliaire 272 reliant l'une à l'autre la première et la deuxième conduite de série 242, 244, sur laquelle est interposée une valve de désactivation progressive 270 à deux positions. Le fonctionnement et le rôle de cette conduite et de cette valve auxiliaire sont identiques à ceux joués par la conduite 170 et la valve 172 dans le circuit 100 et ne seront pas détaillés à nouveau.

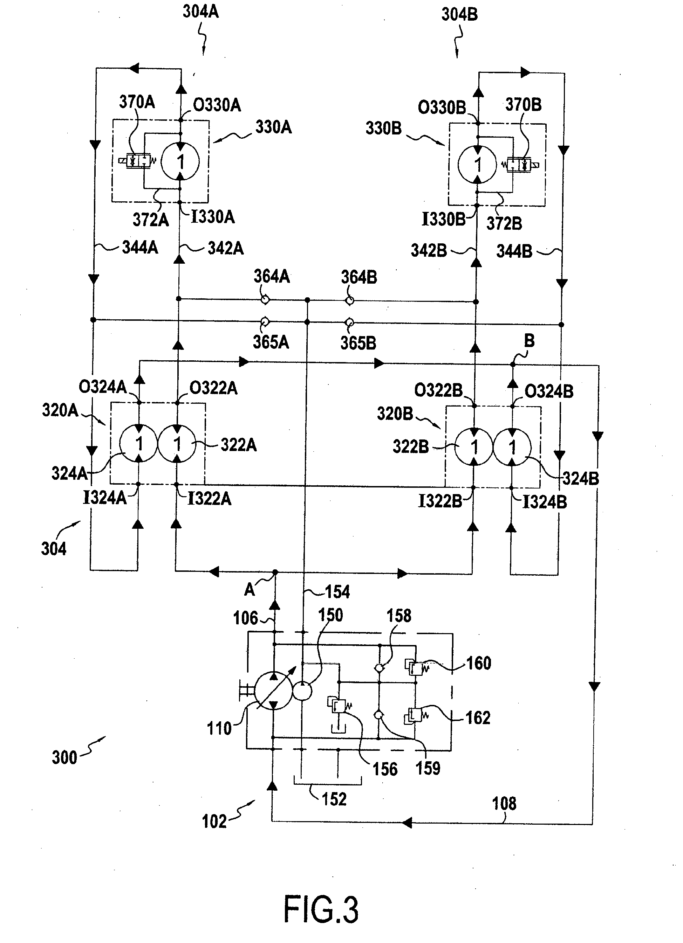

En faisant référence à la figure 3, un troisième mode de réalisation de l'invention, va maintenant être présenté, sous la forme d'un dispositif de transmission hydraulique 300.

Le dispositif 300 est un circuit comprenant quatre moteurs 320A, 330A, 320B, 330B. Chacun de ces moteurs est attelé à une roue non représentée ; ainsi, le dispositif 300 sert à assurer la propulsion d'un véhicule à quatre roues motrices.

Le dispositif 300 comporte une partie d'entraînement 304, et une partie de pompe 102. La partie de pompe 102 est identique à celle du circuit 100.

La partie d'entraînement 304 se subdivise en une partie gauche 304A) et une partie droite 304B symétriques, disposées sur les côtés respectivement gauche et droite du véhicule, et montées en parallèle l'une à l'autre.

Ces deux parties étant symétriques, seule la partie d'entraînement gauche 304A sera présentée en détail.

Cette partie 304A forme un sous-circuit (appelé par la suite circuit 304A hydraulique, qui constitue en lui-même un mode de réalisation de l'invention.

Ainsi, le circuit 304A comporte un moteur primaire 320A, et un moteur secondaire 330A.

Le moteur primaire 320A comporte des sous-moteurs 322A et 324A. Chacun de ces deux sous-moteurs comporte deux orifices principaux. Le sous-moteur 322A comporte ainsi un premier orifice principal 0322A et un troisième orifice principal I322A du moteur primaire 320A ; le sous-moteur 324A comporte un deuxième orifice principal I324A et un quatrième orifice principal O324A du moteur primaire 320A.

Le sens du flux de fluide dans le mode de fonctionnement habituel du dispositif 300, est indiqué par des flèches sur la figure 3.

Le moteur secondaire 330A est un moteur simple (ne comportant pas deux sous-moteurs ou plus). Il comporte un premier et un deuxième orifices principaux notés respectivement I330A et 0330A, permettant l'alimentation et l'échappement de fluide dans le mode de fonctionnement habituel du circuit 300.

Pour l'alimentation en fluide du circuit d'entrainement 304A, le troisième orifice principal I322A du moteur primaire 320A est relié, via un embranchement A et via la conduite d'alimentation commune 106, à un premier orifice principal de la pompe 110.

Pour l'échappement de fluide du circuit d'entrainement 304A, le quatrième orifice principal 0324A du moteur primaire 320A est relié, via un embranchement B et via la conduite d'échappement commune 108 à un deuxième orifice principal de la pompe 110.

Le couplage entre les moteurs primaire 320A et secondaire 330A est fait de la manière suivante :

Le premier orifice principal O322A du moteur primaire 320A est relié au premier orifice principal I330A du moteur secondaire 330 par une première conduite de série 342A.

Le deuxième orifice principal I324A du moteur primaire 320A est relié au deuxième orifice principal O330A du moteur secondaire 330A par une deuxième conduite de série 344A.

Les embranchements A et B sont les points auxquels les conduites respectivement d'alimentation et d'échappement communes 106 et 108 sont reliées via des conduites secondaires d'alimentation des circuits 304A et 304B, aux orifices I322A, I322B, pour l'alimentation, et O324A, O324B, pour l'échappement, des moteurs primaires 320A et 320B.

Les conduites de série 342A et 342B, 344A et 344B, sont reliées à la conduite d'alimentation 154 via des clapets anti-retour 364A, 364B, 365A, 365B.

On notera par ailleurs que pour permettre le fonctionnement du circuit 304A, les sous-moteurs 322A et 324A, et le moteur 330A, sont nécessairement de même cylindrée, notée '1' (dans l'hypothèse où le moteur primaire 320A et le moteur secondaire 330A sont prévus pour tourner à la même vitesse).

De manière générale, grâce au couplage entre les moteurs primaire et secondaire, les vitesses de rotation des moteurs 320A et 320B d'une part, 330A et 330B d'autre part, sont maintenues proportionnelles.

Enfin, comme dans les circuits 100 et 200, dans chaque circuit 304A, 304B, les vitesses relatives du moteur primaire et du moteur secondaire peuvent être découplées.

Dans ce but, le moteur 330A (comme le moteur 330B) comporte une conduite auxiliaire interne 372A, et une valve auxiliaire de désactivation à deux positions 370A, qui est une électrovalve progressive. Cette conduite auxiliaire relie ensemble les conduites de série 342A et 344A. Le fonctionnement et le rôle de cette conduite auxiliaire et de cette valve auxiliaire sont identiques à ceux joués par la conduite 170 et la valve 172 dans le circuit 100 et ne seront pas détaillés à nouveau.

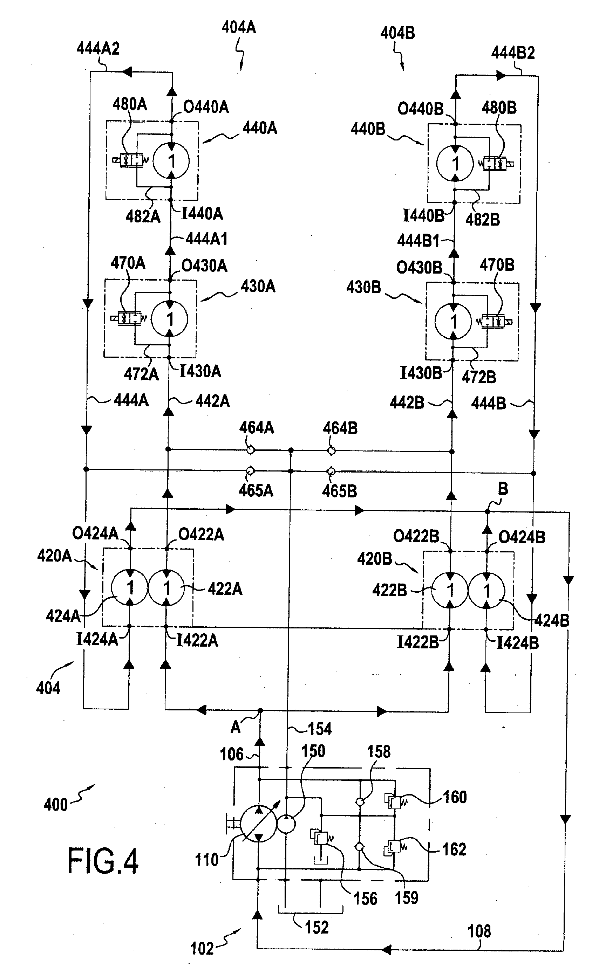

En faisant référence à la figure 4, un autre dispositif de transmission hydraulique 400 va maintenant être présenté.

Ce dispositif 400 est très voisin du dispositif 300. Cependant, chaque circuit 404A, 404B, comporte non seulement un moteur primaire et un moteur secondaire couplés ensemble, mais également un moteur tertiaire couplé aux deux premiers.

En effet, le dispositif 400 est réalisé en interposant respectivement, sur chacune des deuxièmes conduites de série 444A et 444B des circuits 404A et 404B, un moteur tertiaire 440A (et respectivement 440B). Ainsi sur le circuit 404A, le moteur tertiaire 440A interposé divise la conduite de série 444A en un premier tronçon 444A1 et un deuxième tronçon 444A2.

Le premier tronçon 444A1 est relié un premier orifice principal I440A du moteur tertiaire 440A ; et le deuxième tronçon 444A2 est relié à un deuxième orifice principal 0440A du moteur tertiaire 440A.

Le moteur tertiaire 440A est un moteur identique au moteur 430A. Il comporte comme celui-ci une conduite auxiliaire 482A avec une valve auxiliaire de désactivation 480A, à deux positions, permettant de le découpler ou le débrayer des autres moteurs.

L'interposition des moteurs 440A et 440B sur les deuxièmes conduites de série peut permettre par exemple de disposer d'un dispositif hydraulique permettant l'entrainement de six roues, au lieu de quatre pour le circuit 300, c'est-à-dire de deux roues supplémentaires. Sur chaque côté du véhicule sur lequel le circuit 400 est agencé, le circuit permet le couplage des trois roues, à gauche comme à droite.

Naturellement, les moteurs tertiaires ajoutés peuvent être différents des moteurs secondaires. Ils peuvent être des moteurs comportant plusieurs sous-moteurs, par exemple.

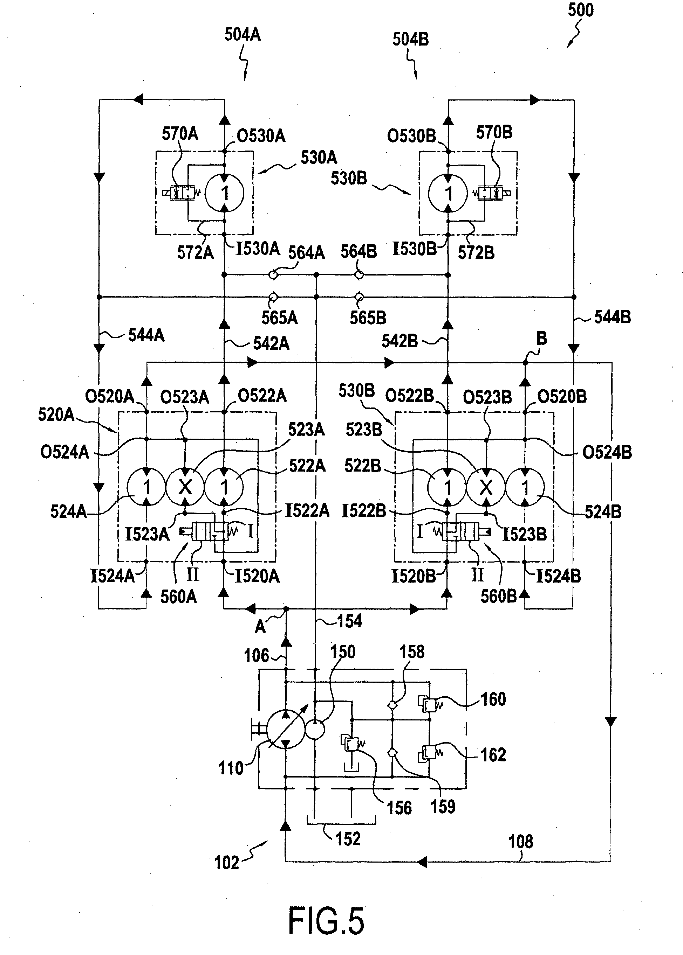

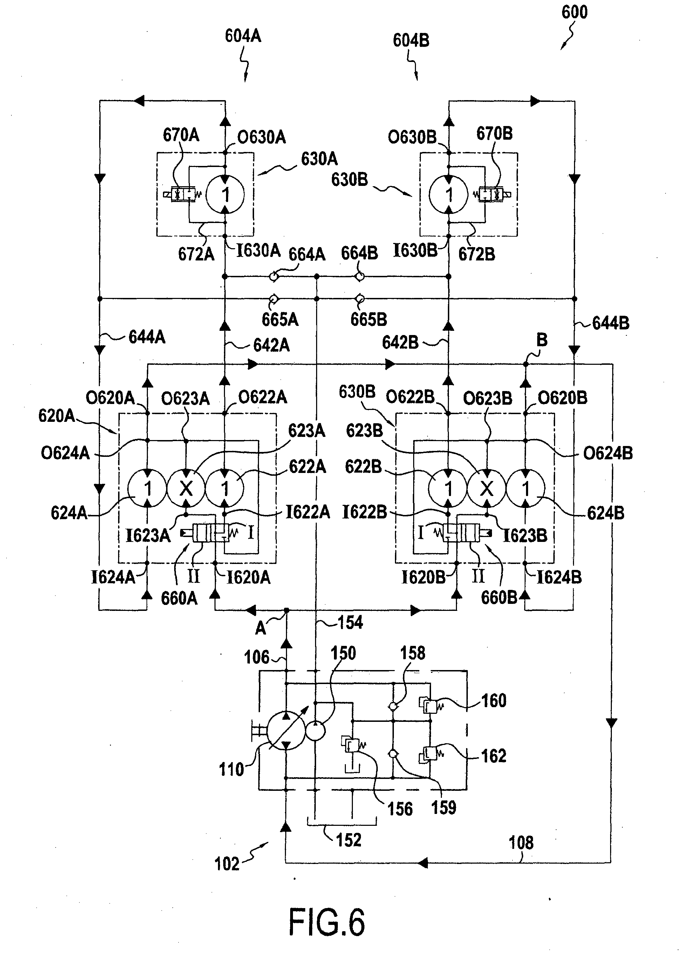

En faisant référence aux figures 5 et 6, deux variantes du dispositif hydraulique 300 présenté sur la figure 3, vont maintenant être présentées. Ces variantes se distinguent du dispositif 300 par le type de moteur primaires utilisés.

En liaison avec la figure 5, une première variante du dispositif 300 formant un dispositif hydraulique 500, va maintenant être détaillée.

Dans le dispositif 500, le moteur primaire 520A (et 520B) du circuit 504A (analogue au circuit 304A) est différent du moteur primaire 320A du circuit 304A. Il comporte néanmoins, comme le moteur 320A, quatre orifices d'alimentation/échappement I520A, I524A et O522A, O520A, externes.

En revanche, contrairement au moteur 320A, le moteur 520A comporte trois sous-moteurs distincts 522A, 523A, 524A, au lieu de deux.

Le premier et le deuxième sous-moteurs 522A et 524A comportent respectivement un premier et un troisième orifice principaux O522A et I522A, et un deuxième et un quatrième orifices principaux I524A et 0524A. Les premier et deuxième orifices O522A et I524A sont des orifices externes du moteur. Les troisième et quatrième orifices principaux I522A et O524A sont des orifices internes.

Le sous-moteur 523A comporte deux orifices principaux I523A et 0523A. L'orifice O523A est relié à l'orifice principal O524A du sous-moteur 524A, lui-même relié à un orifice principal externe O520A du moteur primaire 520A.

Par ailleurs, le moteur primaire 520A comporte une valve hydraulique 560A à deux positions I et II. Cette valve 560A comporte deux paires d'orifices reliées respectivement :
- sur un premier côté, à l'orifice O520A et à un autre orifice externe I520A du moteur 520A ;
- sur un deuxième côté, au troisième orifice principal I522A, du sous-moteur 522A, et au deuxième orifice principal I523A, du sous-moteurs 523A.

En position I de la valve 560A (figure 5), l'orifice externe I520A du moteur 320A est mis en relation à la fois avec les orifices I523A et I522A ; l'orifice O520A n'étant pas mis en communication par la valve 560. Aussi, dans cette position, le sous-moteur 523A apporte un couple complémentaire aux couples respectifs développés par les sous-moteurs 522A et 524A du moteur 520A. Le couplage entre les moteurs primaire 520A et secondaire 330A est identique à celui obtenu dans le dispositif 300. Le flux traversant le sous-moteur 523A n'emprunte pas les conduites utilisées pour le couplage entre le moteur primaire 520A et le moteur secondaire 330A ; aussi, la cylindrée du sous-moteur 523A peut être une cylindrée "X" quelconque, pouvant être différente de la cylindrée "1" commune des sous-moteurs 522A et 524A.

Dans la deuxième position II de la valve 560, les orifices I520A et I522A sont mis en communication, et les orifices I523A et O523A sont mis en communication. Dans cette position, le sous-moteur 523A est donc en bypass et le dispositif 500 fonctionne de manière identique au dispositif 300.

En faisant référence à la figure 6, une autre variante du dispositif hydraulique 300, sous la forme d'un dispositif de transmission hydraulique 600, va maintenant être présenté.

Le dispositif 600 est très voisin du dispositif 500. La seule différence réside dans l'agencement des valves 660A et 660B.

La valve 660A est analogues à la valve 560A. Ainsi, ses orifices sont reliés aux mêmes orifices du moteur primaire 620A ou de ses sous-moteurs, que la valve 560A du moteur primaire 520A du circuit 500.

En revanche, l'agencement interne de la valve 660A est spécifique. Dans ses deux positions respectives I et II, la valve 660A réalise les mises en communication suivantes :

Dans sa première position I, elle relie les deux orifices principaux I622A et I623A, à l'orifice principal externe I620A, alors que l'autre orifice principal O623A du sous-moteur 623A est relié l'orifice principal externe O620A du moteur 620A, et que la valve 660A n'assure aucune mise en relation entre les orifices O623A, O624A d'une part, et I622A, I623A, d'autre part.

Dans cette position, comme pour le dispositif 500, le sous-moteur 623A contribue par le couple qu'il développe au couple développé par le moteur 620A ; sa cylindrée X, qui est quelconque, s'ajoute à celle des sous-moteurs 622A et 624A.

Dans sa deuxième position, la valve 660A met en relation tout d'abord l'orifice principal I622A avec les orifices principaux O624A, O620A et 0623A. D'autre part, elle met en relation l'orifice principal I623A avec l'orifice principal externe I620A du moteur 620A.

Il s'ensuit que les sous-moteurs 622A et 624A, et donc le moteur secondaire 630A, sont mis en bypass. L'entrainement du moteur 620A est alors réalisé par le seul sous-moteur 623A, et le moteur 630A n'est plus entrainé.

Cette position des valves 660A et 660B permet de disposer pour le dispositif 600 d'un mode de fonctionnement dans lequel il n'y a plus de couplage entre les moteurs primaires et les moteurs secondaires, les moteurs secondaires n'étant plus moteurs. Le véhicule fonctionne alors avec seulement deux roues motrices.

## Revendications

1. Circuit hydraulique (100), comportant :
- au moins un moteur primaire (120,130) comportant au moins un premier (122,132) et un deuxième (124,134) sous-moteurs distincts, le premier sous-moteur présentant un premier orifice principal d'alimentation ou d'échappement (0122,0132), le deuxième sous-moteur présentant un deuxième orifice principal (I124,I134) d'alimentation ou d'échappement ; et
- au moins un moteur secondaire (140;230;330A) ;
circuit dans lequel ledit premier orifice principal dudit au moins un moteur primaire est relié à un premier orifice principal (I140) dudit au moins un moteur secondaire par une première conduite de série (142) ;
le circuit **se caractérisant en ce que**
- ledit deuxième orifice principal dudit au moins un moteur primaire est relié à un deuxième orifice principal (0140) dudit au moins un moteur secondaire par une deuxième conduite de série (144), et **en ce que**
- une conduite de série est une conduite qui ne comporte pas de dérivation substantielle, du moins dans une configuration dans laquelle on souhaite synchroniser lesdits moteurs primaire(s) et secondaire(s)

2. Circuit hydraulique selon la revendication 1, dans lequel le premier sous-moteur (122,132) comporte en outre un troisième orifice principal (I122,I132), et le deuxième sous-moteur comporte en outre un quatrième orifice principal (0124,0134), et les troisième et quatrième orifices principaux dudit au moins un moteur primaire sont reliés aux deux orifices principaux d'une pompe principale (110) du circuit hydraulique.

3. Circuit hydraulique selon la revendication 1 ou 2, dans lequel dans chaque moteur secondaire (140), le premier (I140) et le deuxième (0140) orifice principal sont les seuls orifices principaux du moteur secondaire.

4. Circuit hydraulique (200) selon la revendication 1 ou 2, dont ledit au moins un moteur secondaire (230) comporte deux sous-moteurs (232,234), dont le premier comporte ledit premier orifice principal (I234) dudit au moins un moteur secondaire, et dont le deuxième comporte ledit deuxième orifice principal (0232) dudit au moins un moteur secondaire.

5. Circuit hydraulique (400) selon l'une quelconque des revendications 1 à 4, comprenant en outre au moins un moteur tertiaire (440A) interposé sur une desdites conduites de série (444), divisant celle-ci en un premier et un deuxième tronçon (444A1,444A2), de telle sorte que :
- le premier tronçon (444A1) est relié à un premier orifice principal (I440A) du moteur tertiaire ou de chacun des moteurs tertiaires ;
- le deuxième tronçon (444A2) est relié à un deuxième orifice principal (0440A) du moteur tertiaire ou de chacun des moteurs tertiaires.

6. Circuit hydraulique (200) selon l'une quelconque des revendications 1 à 5, comprenant un seul moteur primaire (220) qui comporte exactement deux sous-moteurs (222,224).

7. Circuit hydraulique (100) selon l'une quelconque des revendications 1 à 5, comprenant deux moteurs primaires (120,130), chacun comportant exactement deux sous-moteurs (122,124;132,134).

8. Circuit hydraulique selon l'une quelconque des revendications 1 à 7, agencé dans un véhicule, dans lequel le moteur primaire ou chacun des moteurs primaires est attelé à une roue sur un premier côté du véhicule, et le moteur secondaire ou chacun des moteurs secondaires est attelé à une roue sur un côté opposé du véhicule.

9. Circuit hydraulique (100) selon l'une quelconque des revendications 1 à 8, comprenant en outre une conduite auxiliaire (172) apte à relier l'une à l'autre la première et la deuxième conduite de série (142,144), et susceptible de permettre le découplage de la vitesse de rotation dudit au moins un moteur primaire par rapport à celle dudit au moins un moteur secondaire.

10. Circuit hydraulique (300) selon la revendication 9, dans lequel ladite conduite auxiliaire (372A,372B) est une conduite interne d'un moteur (330A,330B) primaire ou secondaire.

11. Circuit hydraulique (500;600) selon l'une quelconque des revendications 1 à 10, dans lequel au moins un premier moteur primaire (520A,620A) comporte en outre au moins un troisième sous-moteur (523A,623A) distinct des premier et deuxième sous-moteurs (522A,524A;622A,624A).

12. Circuit hydraulique (500;600) selon la revendication 11, comportant en outre une valve de désactivation (560A,660A) disposée en série sur une conduite reliée à un orifice principal dudit troisième sous-moteur, grâce à laquelle ledit troisième sous-moteur peut fournir un couple au moteur dont il fait partie ou être mis en bypass.

13. Circuit hydraulique selon la revendication 12, dans lequel
- ledit premier sous-moteur dudit premier moteur primaire présente en outre un troisième orifice principal (I522A) d'échappement ou alimentation en fluide, et ledit deuxième sous-moteur dudit premier moteur primaire présente en outre un quatrième orifice principal (0524A) d'échappement ou alimentation en fluide, distincts des premier et deuxième orifices principaux (0522A, I524A) ;
- dans la première position (I) de la valve (560A), ledit troisième sous-moteur (523A) est relié auxdits troisième et quatrième orifices du premier moteur primaire (520A) ;
- dans la deuxième position de la valve, les deux orifices principaux (I523A,O523A) dudit troisième sous-moteur sont mis en relation l'un avec l'autre.

14. Circuit hydraulique selon la revendication 12, dans lequel
- ledit premier sous-moteur dudit premier moteur primaire présente en outre un troisième orifice (I622A) principal d'échappement ou alimentation en fluide, et ledit deuxième sous-moteur dudit premier moteur primaire présente en outre un quatrième orifice (0624A) principal d'échappement ou alimentation en fluide, distincts des premier et deuxième orifices principaux (0622A, I624A) ;
- dans la première position (I) de la valve (660A), ledit troisième sous-moteur (623A) est relié auxdits troisième et quatrième orifices du premier moteur primaire (620A) ;
- dans la deuxième position (II) de la valve, les troisième et quatrième orifices principaux (I622A,O624A) dudit premier moteur primaire sont reliés l'un avec l'autre.

15. Dispositif hydraulique comprenant deux circuits hydrauliques chacun selon l'une quelconque des revendications 1 à 14, circuits dans lesquels le premier sous-moteur (122,132) dudit au moins un moteur primaire (120, 130) présente en outre un troisième orifice principal (I122) d'échappement ou alimentation en fluide, et le deuxième sous-moteur (124,134) dudit au moins un moteur primaire (120,130) présente en outre un quatrième orifice principal (0124,0134) d'échappement ou alimentation en fluide, distincts des premier et deuxième orifices principaux ; dispositif dans lequel les troisièmes et quatrièmes orifices principaux des moteurs primaires du premier et du deuxième circuits sont reliés aux orifices principaux d'une même source (110) de fluide sous pression.

## Patentansprüche

1. Hydraulikkreis (100), umfassend:
- wenigstens einen Primärmotor (120, 130), der wenigstens einen getrennten ersten Submotor (122, 132) und einen getrennten zweiten Submotor (124, 134) umfasst, wobei der erste Submotor eine erste Zuführ- oder Auslasshauptöffnung (0122, 0132) aufweist, wobei der zweite Submotor eine zweite Zuführ- oder Auslasshauptöffnung (I124, I134) aufweist, und
- wenigstens einen Sekundärmotor (140; 230; 330A), Kreis, bei dem die erste Hauptöffnung des wenigstens einen Primärmotors mit einer ersten Hauptöffnung (1140) des wenigstens einen Sekundärmotors über eine erste Reihenleitung (142) verbunden ist,
wobei der Kreis **dadurch gekennzeichnet ist, dass**
- die zweite Hauptöffnung des wenigstens einen Primärmotors mit einer zweiten Hauptöffnung (0140) des wenigstens einen Sekundärmotors über eine zweite Reihenleitung (144) verbunden ist und dass
- eine Reihenleitung eine Leitung ist, die keine wesentliche Abzweigung umfasst, zumindest bei einer Anordnung, bei der man die Primär- und Sekundärmotor(en) synchronisieren möchte.

2. Hydraulikkreis nach Anspruch 1, wobei der erste Submotor (122, 132) ferner eine dritte Hauptöffnung (I122, I132) umfasst und der zweite Submotor ferner eine vierte Hauptöffnung (0124, 0134) umfasst und die dritte und die vierte Hauptöffnung des wenigstens einen Primärmotors mit den beiden Hauptöffnungen einer Hauptpumpe (110) des Hydraulikkreises verbunden sind.

3. Hydraulikkreis nach Anspruch 1 oder 2, wobei bei jedem Sekundärmotor (140) die erste (1140) und die zweite (0140) Hauptöffnung die einzigen Hauptöffnungen des Sekundärmotors sind.

4. Hydraulikkreis (200) nach Anspruch 1 oder 2, wobei der wenigstens eine Sekundärmotor (230) zwei Submotoren (232, 234) umfasst, von denen der erste die erste Hauptöffnung (I234) des wenigstens einen Sekundärmotors umfasst und von denen der zweite die zweite Hauptöffnung (0232) des wenigstens einen Sekundärmotors umfasst.

5. Hydraulikkreis (400) nach einem der Ansprüche 1 bis 4, ferner umfassend wenigstens einen an einer der Reihenleitungen (444) eingefügten tertiären Motor (440A), der diese in einen ersten und in einen zweiten Abschnitt (444A1, 444A2) teilt, derart, dass:
- der erste Abschnitt (444A1) mit einer ersten Hauptöffnung (I440A) des tertiären Motors oder von jedem der tertiären Motoren verbunden ist,
- der zweite Abschnitt (444A2) mit einer zweiten Hauptöffnung (0440A) des tertiären Motors oder von jedem der tertiären Motoren verbunden ist.

6. Hydraulikkreis (200) nach einem der Ansprüche 1 bis 5, umfassend einen einzigen Primärmotor (220), der genau zwei Submotoren (222, 224) umfasst.

7. Hydraulikkreis (100) nach einem der Ansprüche 1 bis 5, umfassend zwei Primärmotoren (120, 130), wobei ein jeder genau zwei Submotoren (122, 124; 132, 134) umfasst.

8. Hydraulikkreis nach einem der Ansprüche 1 bis 7, der in einem Fahrzeug angeordnet ist, wobei der Primärmotor oder ein jeder der Primärmotoren mit einem Rad auf einer ersten Seite des Fahrzeugs gekuppelt ist und der Sekundärmotor oder ein jeder der Sekundärmotoren mit einem Rad auf einer gegenüberliegenden Seite des Fahrzeugs gekuppelt ist.

9. Hydraulikkreis (100) nach einem der Ansprüche 1 bis 8, ferner umfassend eine Hilfsleitung (172), die geeignet ist, die erste und die zweite Reihenleitung (142, 144) miteinander zu verbinden, und die in der Lage ist, das Entkoppeln der Rotationsgeschwindigkeit des wenigstens einen Primärmotors gegenüber derjenigen des wenigstens einen Sekundärmotors zu ermöglichen.

10. Hydraulikkreis (300) nach Anspruch 9, wobei die Hilfsleitung (372A, 372B) eine interne Leitung eines Primär- oder Sekundärmotors (330A, 330B) ist.

11. Hydraulikkreis (500; 600) nach einem der Ansprüche 1 bis 10, wobei wenigstens ein erster Primärmotor (520A, 620A) ferner wenigstens einen dritten Submotor (523A, 623A), der von dem ersten und dem zweiten Submotor (522A, 524A; 622A, 624A) getrennt ist.

12. Hydraulikkreis (500; 600) nach Anspruch 11, ferner umfassend ein Deaktivierungsventil (560A, 660A), das an einer Leitung, die mit einer Hauptöffnung des dritten Submotors verbunden ist, in Reihe geschaltet ist und dank dessen der dritte Submotor dem Motor, zu dem er gehört, ein Drehmoment liefern kann oder umgangen werden kann.

13. Hydraulikkreis nach Anspruch 12, wobei
- der erste Submotor des ersten Primärmotors ferner eine dritte Hauptöffnung (I522A) zum Abführen oder Zuführen von Fluid aufweist und der zweite Submotor des ersten Primärmotors ferner eine vierte Hauptöffnung (0524A) zum Abführen oder Zuführen von Fluid aufweist, die von der ersten und der zweiten Hauptöffnung (0522A, I524A) getrennt sind,
- in der ersten Stellung (I) des Ventils (560A) der dritte Submotor (523A) mit der dritten und der vierten Öffnung des ersten Primärmotors (520A) verbunden ist,
- in der zweiten Stellung des Ventils die beiden Hauptöffnungen (I523A, 0523A) des dritten Submotors miteinander in Verbindung gebracht sind.

14. Hydraulikkreis nach Anspruch 12, wobei
- der erste Submotor des ersten Primärmotors ferner eine dritte Hauptöffnung (I622A) zum Abführen oder Zuführen von Fluid aufweist und der zweite Submotor des ersten Primärmotors ferner eine vierte Hauptöffnung (0624A) zum Abführen oder Zuführen von Fluid aufweist, die von der ersten und der zweiten Hauptöffnung (0622A, I624A) getrennt sind,
- in der ersten Stellung (I) des Ventils (660A) der dritte Submotor (623A) mit der dritten und der vierten Öffnung des ersten Primärmotors (620A) verbunden ist,
- in der zweiten Stellung (II) des Ventils die dritte und die vierte Hauptöffnung (I622A, 0624A) des ersten Primärmotors miteinander verbunden sind.

15. Hydraulikvorrichtung, umfassend zwei Hydraulikkreise jeweils nach einem der Ansprüche 1 bis 14, Kreise, bei denen der erste Submotor (122, 132) des wenigstens einen Primärmotors (120, 130) ferner eine dritte Hauptöffnung (1122) zum Abführen oder Zuführen von Fluid aufweist und der zweite Submotor (124, 134) des wenigstens einen Primärmotors (120, 130) ferner eine vierte Hauptöffnung (0124, 0134) zum Abführen oder Zuführen von Fluid aufweist, die von der ersten und der zweiten Hauptöffnung getrennt sind, Vorrichtung, bei der die dritten und vierten Hauptöffnungen der Primärmotoren des ersten und des zweiten Kreises mit den Hauptöffnungen einer gleichen Druckfluidquelle (110) verbunden sind.

## Claims

1. A hydraulic circuit (100) including:
· at least one primary motor (120, 130) comprising at least first (122, 132) and second (124, 134) distinct sub-motors, the first sub-motor having a feed or discharge first main orifice (0122, 0132), and the second sub-motor having a feed or discharge second main orifice (I124, I134); and
· at least one secondary motor (140; 230; 330A);
in which circuit said first main orifice of said at least one primary motor is connected to a first main orifice (I140) of said at least one secondary motor via a first series duct (142);
said hydraulic circuit being **characterized in that**:
· said second main orifice of said at least one primary motor is connected to a second main orifice (0140) of said at least one secondary motor via a second series duct (144), and **in that**
. a series duct is a duct that does not have any substantial bypass, at least in a configuration in which it is desired for said primary motor(s) and said secondary motor(s) to be synchronized.

2. A hydraulic circuit according to claim 1, wherein the first sub-motor (122, 132) also has a third main orifice (I122, I132), and the second sub-motor also has a fourth main orifice (0124, 0134), and the third and fourth main orifices of said at least one primary motor are connected to the two main orifices of a main pump (110) of the hydraulic circuit.

3. A hydraulic circuit according to claim 1 or 2, wherein in each secondary motor (140), the first main orifice (I140) and the second main orifice (0140) are the only main orifices of the secondary motor.

4. A hydraulic circuit (200) according to claim 1 or 2, wherein said at least one secondary motor (230) comprises two sub-motors (232, 234), the first of which has said first main orifice (1234) of said at least one secondary motor, and the second of which has said second main orifice (0232) of said at least one secondary motor.

5. A hydraulic circuit (400) according to any one of claims 1 to 4, further including at least one tertiary motor (440A) interposed on one of said series ducts (444), subdividing it into a first segment (444A1) and into a second segment (444A2), so that:
· the first segment (444A1) is connected to a first main orifice (I440A) of the tertiary motor or of each of the tertiary motors; and
· the second segment (444A2) is connected to a second main orifice (0440A) of the tertiary motor or of each of the tertiary motors.

6. A hydraulic circuit (200) according to any one of claims 1 to 5, including a single primary motor (220) that comprises exactly two sub-motors (222, 224).

7. A hydraulic circuit (100) according to any one of claims 1 to 5, including two primary motors (120, 130), each of which comprises exactly two sub-motors (122, 124; 132, 134).

8. A hydraulic circuit according to any one of claims 1 to 7, arranged in a vehicle, wherein the primary motor or each of the primary motors is connected to a wheel on a first side of the vehicle, and the secondary motor or each of the secondary motors is connected to a wheel on an opposite side of the vehicle.

9. A hydraulic circuit (100) according to any one of claims 1 to 8, further including an auxiliary duct (172) suitable for interconnecting the first and second series ducts (142, 144), and susceptible of enabling the speed of rotation of said at least one primary motor to be decoupled relative to the speed of rotation of said at least one secondary motor.

10. A hydraulic circuit (300) according to claim 9, wherein said auxiliary duct (372A, 372B) is an internal duct of a primary motor or of a secondary motor (330A,330B).

11. A hydraulic motor (500, 600) according to any one of claims 1 to 10, wherein at least a first primary motor (520A, 620A) further comprises at least a third sub-motor (523A, 623A) that is distinct from the first and second sub-motors (522A, 524A; 622A, 624A).

12. A hydraulic circuit (500; 600) according to claim 11, further including a deactivation valve (560A, 660A) disposed in series on a duct connected to a main orifice of said third sub-motor, by means of which valve said third sub-motor can deliver torque to the motor of which it is part, or can be bypassed.

13. A hydraulic circuit according to claim 12, wherein:
· said first sub-motor of said first primary motor also has a fluid discharge or fluid feed third main orifice (I522A), and said second sub-motor of said first primary motor also has a fluid discharge or fluid feed fourth main orifice (0524A), said third and fourth main orifices being distinct from the first and second main orifices (0522A, I524A);
· when the valve (560A) is in the first position (I), said third sub-motor (523A) is connected to said third and fourth orifices of the first primary motor (520A);
· when the valve is in the second position, the two main orifices (I523A, 0523A) of said third sub-motor are put into communication with each other.

14. A hydraulic circuit according to claim 12, wherein:
· said first sub-motor of said first primary motor also has a fluid discharge or fluid feed third main orifice (I622A), and said second sub-motor of said first primary motor also has a fluid discharge or fluid feed fourth main orifice (0624A), said third and fourth main orifices being distinct from the first and second main orifices (0622A, I624A);
· when the valve (660A) is in the first position (I), said third sub-motor (623A) is connected to said third and fourth orifices of the first primary motor (620A);
· when the valve is in the second position (II), the third and fourth main orifices (I622A, 0624A) of said first primary motor are connected together.

15. A hydraulic device comprising two hydraulic circuits each according to any one of claims 1 to 14, in which circuits the first sub-motor (122, 132) of said at least one primary motor (120, 130) also has a fluid discharge or fluid feed third main orifice (I122), and the second sub-motor (124, 134) of said at least one primary motor (120, 130) also has a fluid discharge or fluid feed fourth main orifice (0124, 0134), that are distinct from the first and second main orifices; in which device the third and fourth main orifices of the primary motors of the first and second circuits are connected to the main orifices of a same source (110) of fluid under pressure.
